# EUROPÄISCHE PATENTSCHRIFT

(11) **EP 0 360 058 B1**
(45) Veröffentlichungstag und Bekanntmachung des Hinweises auf die Patenterteilung: **09.03.1994**
(21) Anmeldenummer: 89116223.2
(22) Anmeldetag: 02.09.1989
(51) Int. Cl.: G03B 21/54, G03B 21/64

(54) **Kassette für Dias**
Slide cassette
Cassette de diapositives

(30) Priorität: 17.09.1988 DE 8811831 U
(43) Veröffentlichungstag der Anmeldung: 28.03.1990
(73) Patentinhaber: ARCHIVTECHNIK WILHELM KUNZE, D-75365 Calw (DE)
(72) Erfinder: Kunze, Wilhelm, D-7260 Calw (DE)
(74) Vertreter: Patentanwälte Dipl.-Ing. Bodo Thielking Dipl.-Ing. Otto Elbertzhagen

(56) Entgegenhaltungen:
- EP-A- 0 102 627
- CH-A- 320 356
- DE-A- 2 835 165
- DE-C- 715 173
- DE-U- 1 860 471
- FR-A- 1 505 860

## Beschreibung

Die Erfindung betrifft eine Kassette für Dias nach dem Oberbegriff des Anspruchs 1.

Bei einer bekannten Kassette dieser Art (DE-U 18 60 471) ist die Kennzeichnung dieser Kassetten ein Problem. Für die Anbringung einer Beschriftung in ausreichender Höhe steht bei dieser bekannten Kassette ausschließlich das Scharnierband des Kassettenrückens zur Verfügung. An allen übrigen Seitenflächen war eine Trennfuge zwischen den beiden Kassettenhälften in der Mitte vorgesehen, welche ein Anbringen einer Beschriftung in ausreichender Höhe nicht zuließ. Durch die ständige Klappbewegung des Scharnierbandes beim Öffnen und Schließen der Kassette war es erforderlich, für die Kennzeichnung ausschließlich Textiletiketten zu verwenden. Solche Textiletiketten haben keine glatte Oberfläche und sind durch ihre kunststoffbeschichtete Oberfläche für moderne Schreibmaschinen und Drucker nicht gut geeignet.

Eine Verwendung von Papieretiketten auf dem Scharnierband war nicht möglich, da diese Papieretiketten darauf nicht ausreichend fest haften.

Als nachteilig erweist es sich bei der Verwendung von Textiletiketten in der Anordnung auf dem Scharnierband weiterhin, daß die Kennzeichnung wegen des abgeknickten Textiletiketts bei geöffneter Kassette nicht lesbar ist.

Ausgehend von diesem Stand der Technik liegt der Erfindung die Aufgabe zugrunde, eine Kassette der als bekannt vorausgesetzten Art so auszubilden, daß diese eine ausreichend gut sichtbare Kennzeichnung, insbesondere mit Papieretiketten, auch auf einer Seitenfläche außerhalb des Scharnierbandes zuläßt.

Die Lösung dieser Aufgabe erfolgt erfindungsgemäß dadurch, daß an mindestens einer Stirnseite ein an Ober- oder Unterteil angespritzter, sich über mindestens einen Teil der Breite der Stirnseite und in deren Verlängerung zum jeweils anderen Kassettenteil hin erstreckender Flansch vorgesehen ist, dessen freie Kante zumindest annähernd bündig mit der großen Außenfläche des jeweils anderen Kassettenteils liegt.

Bei einer bevorzugten Ausführungsform weist das dem Flansch gegenüberliegende Kassettenteil eine Aussparung auf, in die der Flansch im Schließzustand der Kassette eintaucht.

Ferner hat es sich als zweckmäßig erwiesen, daß die beiden Kassettenhälften zueinander identisch ausgebildet sind. Es sind dann an beiden Stirnseiten der Kassette Flansche vorgesehen.

Bei der erfindungsgemäßen Lösung ist es möglich, an mindestens einer Stirnseite eine Beschriftung in der doppelten Höhe der Kassettenhälfte bzw. in der Gesamthöhe der Kassette anzuordnen. Durch das Vorsehen von ggfs. zwei stirnseitigen Flanschen wird das Herausnehmen oder Einlegen der Dias in die Kassette, deren innerer Aufbau gegenüber dem Stand der Technik unverändert ist, nicht beeinträchtigt. Es steht erstmalig eine ausreichend große, glatte und steife Gehäusefläche für die Kennzeichnung mit Papieretiketten zur Verfügung. Die Kennzeichnung der Kassette bleibt dabei auch in geöffnetem Zustand lesbar.

Bei der früher erfolgten Art der Kennzeichnung auf dem Scharnierrücken, also auf der Längsseite der Kassette, mußten für eine Lesbarkeit die Kassetten entweder hochkant oder horizontal liegend mit der Längsseite nach außen in Diaschränken archiviert werden. Bei dieser Art der Archivierung konnte die durch das eingebaute Lichtpult zur Verfügung stehende Schranktiefe nicht vollständig genutzt werden. Die Anordnung der Kennzeichnung auf stirnseitigen Flanschen erlaubt nun eine Archivierung in der Weise, daß die schmaleren Stirnseiten zum Betrachter weisen und sich die Scharnierrücken in Schranktiefe erstrecken. Hierdurch wird eine wesentlich bessere Ausnutzung des zur Verfügung stehenden Raums in den Diaschränken möglich.

Das Vorsehen einer Aussparung in der dem Flansch gegenüberliegenden Stirnseite des gegenüberliegenden Kassettenteils ist besonders zweckmäßig. Hierdurch wird es möglich, die Außenmaße der Kassette gegenüber den in großen Stückzahlen bereits in Gebrauch befindlichen bekannten Archivkassetten unverändert zu lassen.

Es können deshalb die Kassetten gemäß Stand der Technik und die neuen Kassetten ohne weiteres nebeneinander verwendet werden.

Gemäß einem weiteren Merkmal der Erfindung ist der Flansch an derjenigen Stirnseite jedes Kassettenteils angeordnet, an der die nebeneinander und schräg übereinander anzuordnenden Dias am tiefsten im Kassettenteil liegen. Hierdurch bleibt ein guter Zugriff zu den Dias gewährleistet.

Gemäß einem weiteren Vorschlag der Erfindung sind an den Rändern der Kassette zueinander komplementäre, ineinander eingreifende Nuten und Federn vorgesehen. Hierdurch erfolgt bei entsprechender Ausbildung von Nuten von Federn eine saubere Abdichtung und eine sichere Zentrierung.

Erfindungsgemäß wird ferner vorgeschlagen, daß die Federn an der dem Flansch gegenüberliegenden Stirnseite der gegenüberliegenden Kassettenhälfte unterbrochen ausgebildet sind. Die vorgesehenen Unterbrechungen erleichtern einen Zugriff zu den dahinter befindlichen Dias.

Zweckmäßig ist es ferner, daß die Federn an den Durchbrechungen in Längsrichtung jeweils abgerundet sind.

Ferner wird erfindungsgemäß vorgeschlagen, daß die Federn auf zumindest einem Teil ihrer Länge eine Breite aufweisen, welche der Breite der gegenüberliegenden Nut entspricht. Durch diese Ausbildung wird eine besonders genaue Zentrierung der Kassettenhälften erzielt.

Es ist ferner zweckmäßig, daß an beiden Seiten der Längsseiten der Kassetten Griffausnehmungen angeordnet sind. Diese Griffausnehmungen erleichtern ein Herausziehen der Kassetten aus ihren Halterungen.

Bei einer bevorzugten Ausführungsform ist die aufschiebbare Schiene in ihrer aufgeschobenen Lage mit mindestens einer der beiden Gehäusehälften verrastet. Diese Ausgestaltung hat zur Folge, daß nicht beim Herausnehmen der Kassette ein unbeabsichtigtes Abziehen der Schiene und damit ein unbeabsichtigtes Lösen des Verschlusses ermöglicht wird.

Bei einer bevorzugten Ausgestaltung weisen die Führungsbahnen für die Schiene jeweils an ihren Enden Anschläge zur Fixierung der elastisch ausgebildeten Schiene auf. Diese Anschläge haben vorzugsweise Schrägflächen.

Nachstehend wird eine bevorzugte Ausführungsform der Erfindung anhand der Zeichnung im einzelnen beschrieben. Es zeigen:

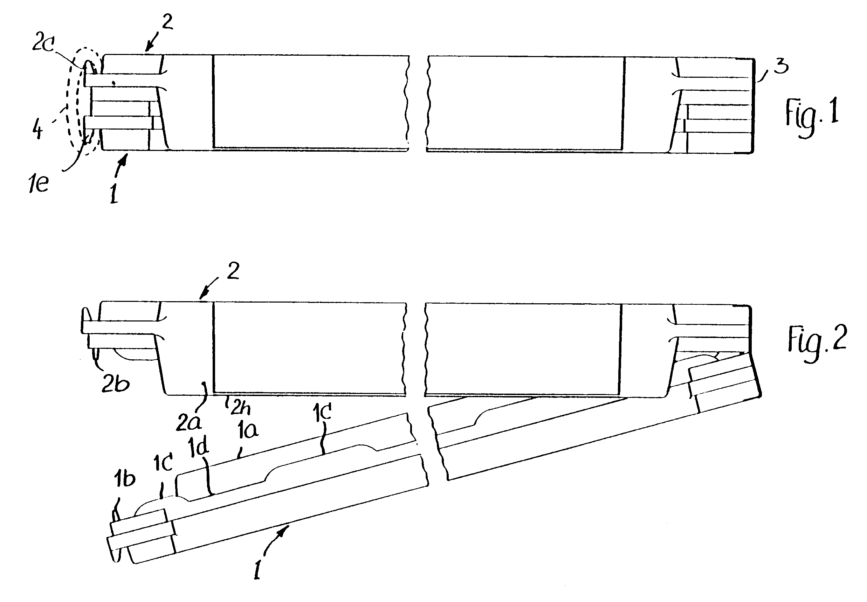

- Figur 1 -: eine Stirnansicht der Kassette im geschlossenen Zustand,
- Figur 2 -: die Ansicht gemäß Figur 2 in teilweise geöffnetem Zustand der Kassette,
- Figur 3 -: einen Schnitt durch einander gegenüberliegende Stirnwandbereiche von Ober- und Unterteil im voneinander abgehobenen Zustand,
- Figur 4 -: eine Draufsicht auf die Innenseite eines Randbereichs eines Kassettenteils,
- Figur 5 -: eine Draufsicht auf die Außenseite eines Eckbereichs eines Kassettenteils,
- Figur 6 -: einen Schnitt entlang Ebene VI - VI gemäß Figur 5.

Bei der dargestellten Ausführungsform sind zwei zueinander identische Kassettenteile vorgesehen, die als Kunststoffspritzgußteile aus transparentem Kunststoff ausgebildet sind. Die Kassettenteile sind an einer Längsseite über ein Klebeband 3 verbunden, das ein Klappscharnier bildet. Auf der dem Klebeband 3 gegenüberliegenden Seite ist im geschlossenen Zustand eine etwa C-förmige Schiene 4 gestrichelt dargestellt. Mit dieser Schiene 4 werden die beiden Kassettenhälften 1 und 2 verschlossen gehalten.

An der Stirnseite eines jeden Kassettenteils 1 und 2 ist jeweils ein Flansch 1a bzw. 2a vorgesehen. Die Flansche 1a und 2a erstrecken sich über die gesamte Dicke oder Höhe der Kassette und können demzufolge als Grundlage für ein entsprechend großes Papierklebeetikett dienen.

An den Rändern der Kassettenteile sind umlaufend Nuten und Federn angeordnet. Die Federn 1b auf der Längsseite tauchen in nicht sichtbare Nuten des Kassettenteils 2 ein, die Federn 2b in nicht sichtbare gegenüberliegende Nuten des Kassettenteils 1.

An den den Flanschen gegenüberliegenden Stirnseiten des jeweils anderen Kassettenteils sind ebenfalls Federn 1c vorgesehen, welche jeweils mit Abrundungen in Unterbrechungen 1d auslaufen. Die Unterbrechungen erlauben einen besseren Zugriff zum Inhalt der Kassette als er sich bei an der Stirnseite durchlaufenden Federn ergeben würde.

Die Federn weisen auf mindestens einem Teil ihrer Länge eine Breite auf, welche der Breite des gegenüberliegenden Bereichs der gegenüberliegenden Nut entspricht.

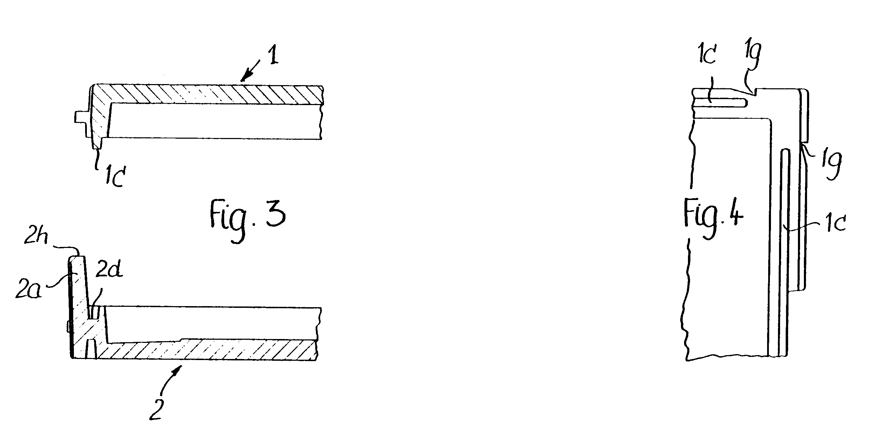

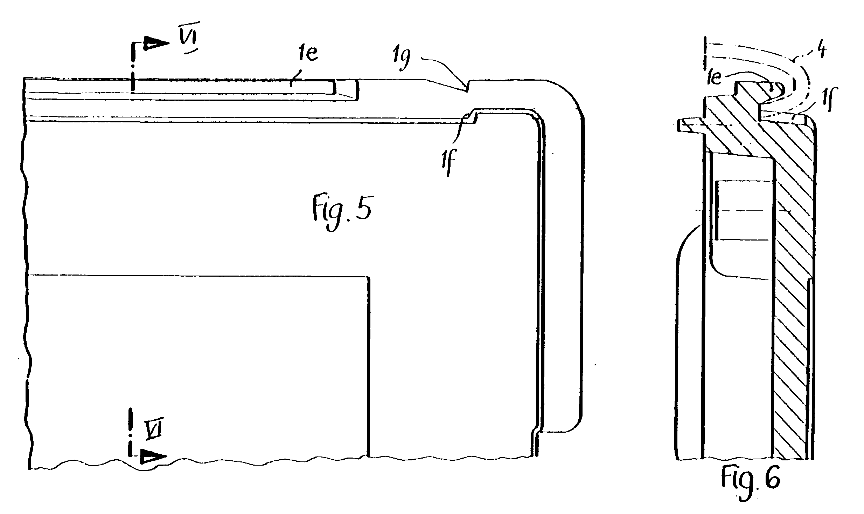

Die Schiene 4 umgreift die beiden stirnseitigen Rippen 2c und 1e. Der hinter den Rippen 2c und 1e gebildete Kanal zur Aufnahme der Schiene verläuft geradlinig und besitzt im Bereich der Enden Anschläge, welche aus Figuren 5 und 6 ersichtlich sind. Die Anschläge 1f ragen in die Verlängerung des Aufnahmekanals hinein und arretieren die elastische Verschlußschiene 4 in ihrer Längsposition. Bei Aufwenden einer entsprechenden Schubkraft können die Verschlußschienen über die Anschläge 1f hinaus verschoben werden. Diese Anschläge 1f sind im dargestellten Ausführungsbeispiel an beiden Kassetten jeweils in der Nähe der Stirnseite dieses Kassettenteils angeordnet.

Mit 1g sind Griffausnehmungen bezeichnet, die ein Entnehmen der Kassetten erleichtern.

## Patentansprüche

1. Kassette zur Archivierung von Dias, die derart angeordnet sind, daß das Bildfeld sämtlicher Dias voll sichtbar ist, bestehend aus zwei transparenten Kassettenteilen (1, 2), einem Ober- (1) und einem Unterteil (2) wobei Ober- und Unterteil an einer Stirnseite (3) klappbar miteinander verbunden und mit einer auf der gegenüberliegenden Stirnseite aufschiebbaren Schiene (4) verschließbar sind,
dadurch gekennzeichnet,
daß an mindestens einer Stirnseite ein an Ober- oder Unterteil (1 oder 2) angespritzter, sich über mindestens einen Teil der Breite der Stirnseite und in deren Verlängerung zum jeweils anderen Kassettenteil hin erstreckender Flansch (1a; 2a) vorgesehen ist, dessen freie Kante (1h; 2h) zumindest annähernd bündig mit der großen Außenfläche des jeweils anderen Kassettenteils liegt.

2. Kassette nach Anspruch 1,
dadurch gekennzeichnet,
daß das dem Flansch (1a; 2a) gegenüberliegende Kassettenteil eine Aussparung aufweist, in die der Flansch im Schließzustand der Kassette eintaucht.

3. Kassette nach Anspruch 1 oder 2,
dadurch gekennzeichnet,
daß die beiden Kassettenhälften (1; 2) zueinander identisch ausgebildet sind.

4. Kassette nach einem oder mehreren der Ansprüche 1 bis 3,
dadurch gekennzeichnet,
daß der Flansch (1a; 2a) an derjenigen Stirnseite jedes Kassettenteils (1; 2) angeordnet ist, an der die nebeneinander und schräg übereinander anzuordnenden Dias am tiefsten im Kassettenteil liegen.

5. Kassette nach einem oder mehreren der Ansprüche 1 bis 4,
dadurch gekennzeichnet,
daß an den Rändern der Kassettenteile (1; 2) zueinander komplementäre, ineinander eingreifende Nuten (2a) und Federn (1c) vorgesehen sind.

6. Kassette nach Anspruch 5,
dadurch gekennzeichnet,
daß die Federn (1c) an der dem Flansch (2a) gegenüberliegenden Stirnseite der gegenüberliegenden Kassettenhälfte (2) unterbrochen ausgebildet sind.

7. Kassette nach einem oder mehreren der Ansprüche 5 bis 6,
dadurch gekennzeichnet,
daß die Federn (1c) an den Durchbrechungen (1d) in Längsrichtung jeweils abgerundet sind.

8. Kassette nach einem oder mehreren der Ansprüche 5 bis 7,
dadurch gekennzeichnet,
daß die Federn (1c) auf zumindest einem Teil ihrer Länge eine Dicke aufweisen, welche der Breite der gegenüberliegenden Nut (2d) entspricht.

9. Kassette nach einem oder mehreren der Ansprüche 1 bis 8,
dadurch gekennzeichnet,
daß jeweils an beiden Enden der Stirnseiten der Kassettenteile auf beiden Seiten Griffausnehmungen (1g) angeordnet sind.

10. Kassette nach einem oder mehreren der Ansprüche 1 bis 9,
dadurch gekennzeichnet,
daß die aufschiebbare Schiene (4) in ihrer aufgeschobenen Lage mit mindestens einer der beiden Kassettenteile (1; 2) verrastbar ist.

11. Kassette nach Anspruch 10,
dadurch gekennzeichnet,
daß Führungsbahnen für die Schiene (4) vorgesehen sind, die jeweils an ihren Enden Anschläge (1f) zur Fixierung der elastisch ausgebildeten Schiene (4) aufweisen.

12. Kassette nach Anspruch 11,
dadurch gekennzeichnet,
daß die Anschläge (1f) Schrägflächen aufweisen.

## Claims

1. Cassette for archiving slides which are arranged so that the image field of all the slides is fully visible, consisting of two transparent cassette parts (1,2), an upper (1) and a lower part (2), wherein the upper and lower parts are connected together for folding movement at one end side (3) and are closable with a rail (4) which can be pushed onto the opposite end side,
characterised in that at least one end side is provided with a flange (1a;2a) which is injection moulded on the upper or lower part (1 or 2) and extends over at least a part of the width of the end side and the extension thereof towards each other cassette part wherein the free edge (1h;2h) of the flange lies at least approximately flush with the large outer face of each other cassette part.

2. Cassette according to claim 1
characterised in that the cassette part opposite the flange (1a;2a) has a recess into which the flange projects when the cassette is in the closed state.

3. Cassette according to claim 1 or 2
characterised in that the two cassette halves (1;2) are made identical with each other.

4. Cassette according to one or more of claims 1 to 3
characterised in that the flange (1a;2a) is mounted on that end side of each cassette part (1;2) where the slides which are to be mounted side by side and inclined above each other lie at the lowest point in the cassette part.

5. Cassette according to one or more of claims 1 to 4
characterised in that the edges of the cassette parts (1;2) are provided with complementary interengaging tongues (1c) and grooves (2a).

6. Cassette according to claim 5
characterised in that the tongues (1c) are formed interrupted on the end side of the opposite cassette half (2) opposite the flange (2a).

7. Cassette according to one or more of claims 5 to 6
characterised in that the tongues (1c) are each rounded in the longitudinal direction at the breaks (1d).

8. Cassette according to one or more of claims 5 to 7
characterised in that the tongues (1c) have on at least a part of their length a thickness which corresponds to the width of the opposite groove (2d).

9. Cassette according to one or more of claims 1 to 8
characterised in that grip recesses (1g) are provided at each end of the end sides of the cassette parts on both sides.

10. Cassette according to one or more of claims 1 to 9
characterised in that the push-on rail (4) can be locked in its pushed-on position by detent with at least one of the two cassette parts (1;2).

11. Cassette according to claim 10
characterised in that guide paths for the rail (4) are provided which each have at their ends stops (1f) for fixing the elastically formed rail (4).

12. Cassette according to claim 11
characterised in that the stops (1f) have inclined faces.

## Revendications

1. Cassette pour diapositifs, qui sont disposés de sorte que le champ d'image de tous les diapositifs soit entièrement visible, composée de deux parties transparentes (1, 2), dont une partie supérieure (1) et une partie inférieure (2), qui sont reliées ensemble, étant rabattables sur un côté frontal (3) et pouvant être fermées à l'aide d'une coulisse 4 déplacable sur le côté frontal opposé,
caractérisée par le fait
qu'un côté frontal au moins est pourvu d'une patte (1a; 2a), qui, moulée par injection à la partie supérieure ou inférieure (1 ou 2), s'étend au moins sur une partie de la largeur de la partie frontale et en prolongement de celle-ci, en direction de l'autre partie de la cassette, le bord libre (1h; 2h) de cette patte étant, au moins approximativement, à fleur de la grande surface externe de l'autre partie de la cassette.

2. Cassette selon la revendication 1,
caractérisée par le fait
que la partie de la cassette opposée à la patte (1a; 2a) présente un évidement, dans lequel la patte penètre lorsque l'on ferme la cassette.

3. Cassette selon la revendication 1 ou 2,
caractérisée par le fait
que les deux moitiés (1; 2) de la cassette sont de conception identique.

4. Cassette selon une ou plusieurs revendications 1 à 3,
caractérisée par le fait
que la patte (1a; 2a) est disposée sur le côté frontal de chaque partie (1; 2) de la cassette, où les diapositifs, disposés les uns à côté de autres et, obliquement, les uns au-dessus des autres, se trouvent au plus profond de cette partie de la cassette.

5. Cassette selon une ou plusieurs revendications 1 à 4,
caractérisée par le fait
que des encoches (2a) et des ressorts (1c), qui se complètent et s'enclenchent les uns dans les autres, sont prévus sur les bords des parties (1; 2) de la cassette.

6. Cassette selon la revendication 5,
caractérisée par le fait
que les ressorts (1c) de la partie frontale de la moitié (2) de la cassette, opposée à la patte (2a), sont interrompus.

7. Cassette selon la revendication 5 ou 6 ou les revendications 5 et 6,
caractérisée par le fait
que les ressorts (1c) sont arrondis, dans le sens de la longueur, aux interruptions (1d).

8. Cassette selon une ou plusieurs revendications 5 à 7,
caractérisée par le fait
que les ressorts (1c) présentent, au moins sur une partie de leur longueur, une épaisseur correspondant à la largeur des encoches (2d) leur faisant face.

9. Cassette selon une ou plusieurs revendications 1 à 8,
caractérisée par le fait
que des cavités de préhension (1g) sont disposées aux deux extrémités des parties frontales des moitiés de la cassette.

10. Cassette selon une ou plusieurs revendications 1 à 9,
caractérisée par le fait
que la coulisse (4), en position poussée, prend l'encoche dans, au moins, l'une des deux parties (1; 2) de la cassette.

11. Cassette selon la revendication 10,
caractérisée par le fait
que des voies de guidage sont prévues pour la coulisse (4), leurs extrémités présentant des butées (1f); qui fixent la coulisse (4) élastique.

12. Cassette selon la revendication 11,
caractérisée par le fait
que les butées (1f) présentent des surfaces obliques.
